# EUROPÄISCHE PATENTSCHRIFT

(11) **EP 1 813 144 B1**
(45) Veröffentlichungstag und Bekanntmachung des Hinweises auf die Patenterteilung: **08.04.2009**
(21) Anmeldenummer: 06124469.5
(22) Anmeldetag: 21.11.2006
(51) Int. Cl.: A01D 75/18, A01F 29/16

(54) **Verfahren und Vorrichtung zur Höheneinstellung von Vorsatzgeräten**
Method and device for height control of headers
Procédé et dispositif pour réglage de hauteur des têtes de récolte

(30) Priorität: 30.01.2006 DE 102006004365
(43) Veröffentlichungstag der Anmeldung: 01.08.2007
(73) Patentinhaber: CLAAS Selbstfahrende Erntemaschinen GmbH, 33428 Harsewinkel (DE)
(72) Erfinder: Brune, Markus, 33428, Marienfeld (DE)

(56) Entgegenhaltungen:
- EP-A1- 1 108 351
- DE-A1- 19 800 524
- US-A- 4 275 546
- US-A- 4 343 140

## Beschreibung

Die Erfindung betrifft ein Verfahren und eine Vorrichtung zur Höheneinstellung eines Vorsatzgerätes an einer landwirtschaftliche Arbeitsmaschine nach den Oberbegriffen der Ansprüche 1 und 8.

Aus der DE 43 11 191 ist ein Mähdrescher mit einer Schutzvorrichtung bekannt geworden, die eine Fremdkörpererkennungseinrichtung aufweist. Unterhalb der im Eintrittsbereich des Schrägförderers angeordneten Umlenkwalze ist im Boden des Schrägförderers eine akustische Messfühleranordnung zugeordnet. Die akustische Messfühleranordnung besteht aus einem Messfühlerbalken, der quer über die Breite des Bodens des Schrägförderers angeordnet ist und einem akustischen Messwandler, der an dem Messfühlerbalken befestigt ist. Mittels einer zentralen Steuer- und Auswerteeinheit werden die von der Messfühleranordnung generierten Fremdkörpersignale zur Ansteuerung einer in Gutflussrichtung der Messfühleranordnung nachgeordneten Auswurfeinrichtung herangezogen. In Abhängigkeit von den generierten Fremdkörpersignalen gibt die Auswurfeinrichtung eine sich über den gesamten Querschnitt des Schrägförderers erstreckende Auswurföffnung im Boden des Schrägförderers frei, so dass durch diese Austrittsöffnung der den oder die detektierten Fremdkörper enthaltene Erntegutstrom aus dem Schrägförderer herausgefördert wird.

Nachteilig bei diesem bekannten Mähdrescher ist, dass die Schutzvorrichtung nicht verhindert, dass die Fremdkörper von dem Schneidwerk aufgenommen werden.

Aus der DE 198 00 524 A1 ist eine sensorgesteuerte Hubwerksregulierung eines Schneidwerks bekannt, bei dem mittels eines Mikrowellensensors Hindernisse wie beispielsweise Steine erkannt werden und in Abhängigkeit von erkannten Hindernissen das Schneidwerk angehoben wird. Nachteilig an dem bekannten System ist es, dass das Fremdkörperaufkommen, also die Menge der Fremdkörper pro Zeit- oder Flächeneinheit keinen Einfluss auf die Höheneinstellung hat.

Der Erfindung liegt daher die Aufgabe zugrunde, die Nachteile des Standes der Technik zu vermeiden und ein Verfahren und die zugehörige Vorrichtung zur Höhenseinstellung des Vorsatzgerätes vorzuschlagen bei der die Aufnahme von Fremdkörpern durch das Vorsatzgerät verhindert oder zumindest reduziert wird und damit den Mähdrescher mitsamt dem Schneidwerk und dem Schrägförderer vor Beschädigungen schützt, die durch die Fremdkörper verursacht werden.

Diese Aufgabe wird erfindungsgemäß durch die kennzeichnenden Merkmale der Ansprüche 1 und 8 gelöst. Weitere vorteilhafte Wirkungen des Erfindungsgegenstandes ergeben sich aus den Unteransprüchen.

Dadurch, dass die Höheneinstellung des Vorsatzgerätes in Abhängigkeit von dem Fremdkörpervorkommen erfolgt, kann die Schnitthöhe des Vorsatzgerätes derart angepasst werden, dass sich das Vorsatzgerät über die Fremdkörper hinweg bewegt. Damit wird verhindert, dass die auf dem Feld liegenden Fremdkörper vom Vorsatzgerät aufgenommen werden können, so dass eine Beschädigung des Vorsatzgerätes und der nachfolgenden Organe durch die Fremdkörper vermieden wird.

Vorteilhafterweise weist die Fremdkörpererkennungseinrichtung wenigstens ein Sensierelement auf, wobei das Sensierelement ein Fremdkörpersignal generiert, dessen Intensität proportional zum Fremdkörperaufkommen ist und wobei das Fremdkörpersignal einer Steuer- und Auswerteeinheit zugeführt wird und die Steuer- und Auswerteeinheit zumindest ein Stellsignal generiert, welches die Höheneinstellung des Vorsatzgerätes bewirkt, so dass die Höheneinstellung automatisch erfolgt.

Dadurch, dass je mehr Fremdkörper detektiert werden, dass Vorsatzgerät umso höher angehoben wird, soll eine erhöhte Sicherheit geschaffen werden, dass weitere Fremdkörper von dem Getreideschneidwerk aufgenommen werden.

Indem das Vorsatzgerät erst dann angehoben wird, wenn das Fremdkörpersignal einen Fremdkörpersignalschwellwert übersteigt, kann ausgeschlossen werden, dass das Vorsatzgerät schon bei durch Erntegut ausgelösten Signalen verschwenkt wird.

In einer vorteilhaften Ausgestaltung der Erfindung wird das Vorsatzgerät um eine Höhendifferenz auf eine obere Position angehoben, wobei die Höhendifferenz durch wenigstens eine Kennlinie vorgegeben wird, so dass eine relativ einfache und daher schnelle Höheneinstellung des Vorsatzgerät durchführbar ist.

In einer vorteilhaften Weiterbildung der Erfindung verharrt das Vorsatzgerät für einen Zeitraum in der oberen Position und wird nach Ablauf des Zeitraums abgesenkt, so dass das Vorsatzgerät sicher über den mit Fremdkörpern durchsetzten Bereich des Feldes hinwegbewegt wird,

In einer alternativen Ausführung der Erfindung wird das Vorsatzgerät abgesenkt, wenn das Fremdkörpersignal den Fremdkärpersignalschwellwert für einen weiteren Zeitraum unterschreitet, damit der nicht mit Fremdkörpern durchsetzte Bereich des Feldes größten Teils mit der voreingestellten Soll-Schnitthöhe abgeerntet wird.

In vorteilhafter Weiterbildung sind die Kennlinie und/oder der Fremdkörpersignalschwellwert und/oder der Zeitraum und/oder der weitere Zeitraum frei wahlbar und abspeicherbar, so dass Höheneinstellung des Vorsatzgerätes an beispielsweise die Erntegeschwindigkeit, das Erntegut oder der Art der Fremdkörper anzupassen.

Eine konstruktiv einfache Umsetzung des erfindungsgemäßen Verfahrens wird dadurch erreicht, wenn die Fremdkörpererkennungseinrichtung ein oder mehrere Sensierelemente zur Erfassung von Fremdkörpern aufweist und die von den Sensierelementen generierten Fremdkörpersignale einer Steuer- und Auswerteeinheit zugeführt werden, wobei in der Steuer- und Auswerteeinheit Höhendifferenzen hinterlegt sind und in Abhängigkeit von den Fremdkörbersignalen Stellsignale von der Steuer- und Auswerteeinheit an das Vorsatzgerät höhenbeweglich führende Hubzylinder übermittelt werden, so dass die Höhenverstellung des Vorsatzgerätes in Abhängigkeit von dem Fremdkörperaufkommen erfolgt.

In einer ersten Ausführung der erfindungsgemäßen Schutzvorrichtung ist der landwirtschaftlichen Arbeitsmaschine ein Schrägförderer zugeordnet und die Fremdkörpererkennungseinrichtung ist an dem Einzugsbereich des Schrägförderers an der landwirtschaftlichen Arbeitsmaschine angeordnet. Diese Anordnung der Schutzvorrichtung hat den Vorteil, dass sie beim Wechsel des Schneidwerks an der landwirtschaftlichen Arbeitsmaschine verbleibt, so dass nicht jedes Schneidwerk mit einer separaten Schutzvorrichtung ausgestattet werden muss.

In einer alternative Ausführung der erfindungsgemäßen Schutzvorrichtung ist der landwirtschaftlichen Arbeitsmaschine ein einen Mähbalken umfassende Getreideschneidwerk zugeordnet und die Fremdkörpererkennungseinrichtung ist in einem dem Mähbalken nachgeordneten Einzugsbereich am Schneidwerk angeordnet, so dass die Fremdkörper frühzeitig erkannt werden.

Dadurch, dass der Sensor in Abhängigkeit von einem auf das Sensierelement ausgeübten Druck und/oder in Abhängigkeit von einer Beschleunigung des Sensierelementes ein Druck- und/oder Beschleunigungssignal generiert, das proportional zum Druck und/oder der Beschleunigung ist, kann die von dem Erntegut und/oder von den Fremdkörpern auf die Sensierelemente ausgeübte Kraft auf konstruktiv einfache Leise ermittelt werden, Dies hat zudem den Vorteil, dass in die Gutschicht eingebettete Fremdkörper durch die Verdichtung der Gutmatte sehr präzise durch Drucksensoren erkennbar sind während bei geringem oder fehlendem Erntegutdurchsatz transportierte Fremdkörper sehr gut durch Beschleunigungssensoren detektierbar sind, da die dämpfende Eigenschaften der Erntegutschicht dann entfallen.

Weitere vorteilhafte Ausgestaltungen sind Gegenstand weiterer Unteransprüche und werden nachfolgend an Hand des in einer Figur dargestellten Ausführungsbeispiels näher erläutert.

Es zeigen:
Fig. 1 eine Seitenansicht einer als Mähdrescher ausgeführten landwirtschaftlichen Arbeitsmaschine,
Fig.2 zeigt ausschnittsweise den Mähdrescher gemäß Fig. 1 mit einer erfindungsgemäßen Höheneinstellung des Getreideschneidwerks,

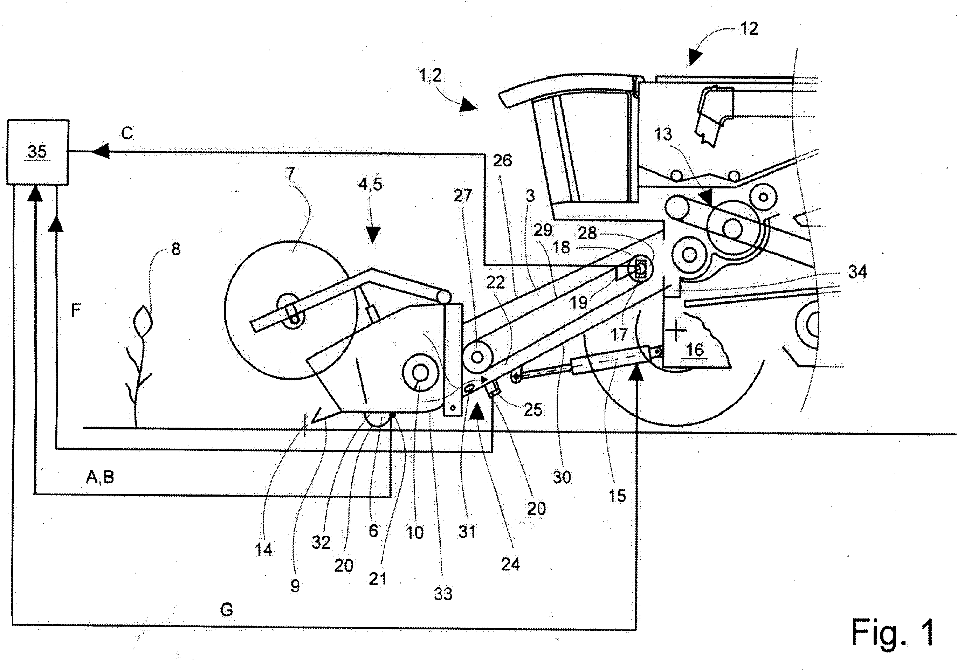

In der Fig. 1 ist eine als Mähdrescher 1 ausgeführte landwirtschaftliche Arbeitsmaschine 2 dargestellt, an deren Schrägförderer 3 ein als Getreideschneidwerk 4 ausgeführte Vorsatzgerät 5 angeordnet ist. Das Getreideschneidwerk 4 besteht aus einem Schneidtisch 6 und einer daran befestigten, rotierenden Haspel 7. Das Erntegut 8 wird von einem im vorderen Bereich des Schneidtischs 6 angeordnetem Mähbalken 9 abgeschnitten und mit Hilfe der Haspel 7 zu einer im Schneidtisch 6 angeordneten Einzugsschnecke 10 gefordert. Die Einzugsschnecke 10 führt das Erntegut 8 dem Schrägförderer 3 zu, der das Erntegut 8 an sich bekannten und daher hier nicht näher erläuterten im Maschinengehäuse 12 des Mähdreschers 1 angeordneten Arbeitsorganen 13 übergibt. Damit der Mähbalken 9 des Getreideschneidwerks 4 eine definiert Schnitthöhe 14 einhalten kann, wird der Schrägförderer 3 über Hubzylinder 15, die einenends schwenkbeweglich an Konsolen 16 des Mähdreschers 1 und kölbenstangenseitig schwenkbeweglich mit dem Schrägförderer 3 verbunden sind, um eine quer zur Fahrtrichtung FR angeordnet Schwenkachse 17 verschwenkbar geführt. Eine Druckbeaufschtagung der Hubzylinder 15 führt zu einem Anheben und eine Druckentlastung zu einem Absenken des Vorsatzgerätes 5.
Damit die Position des mit dem Schrägförderer 3 verbundenen Vorsatzgerätes 5 bestimmbar wird, ist der Schwenkachse 17 des Schrägförderers 4 ein Drehwinkelsensor 18 zugeordnet, der die Bestimmung des Neigungswinkels 19 des Schrägförderschachtes 4 in Bezug auf das Maschinengehäuse 5 ermöglicht.
Zudem verfügt das Getreideschneidwerk 4 in an sich bekannter Weise über ein oder mehrere unterhalb des Getreideschneidwerk 4 an diesem fixierte Tastbügel 20, die über Drehpotentiometer 21 an dem Getreideschneidwerk 4 befestigt sind und den Abstand zum Feld und damit die Schnitthöhe 14 des Getreideschneidwerks 4 registrieren.
Im Einzugsbereich 22 des Schrägförderers 3 ist eine Fremdkörpererkennungseinrichtung 24 angeordnet, die ein an sich bekanntes und daher an dieser Stelle nicht näher erläutertes Sensierelement 25 aufweist. Der Schrägförderer 3 wird von einem Gehäuse 26 gebildet, welches in seinem Innern einen um Umlenktrommeln 26, 27 umlaufenden Kettenförderer 28 aufnimmt. Das Sensierelement 25 befindet sich unterhalb der frontseitigen Umlenktrommel 26 im Bereich des den untenseitigen Abschluss des Gehäuses 26 bildenden Boden 30 und sensiert das unterschlächtig geförderte Erntegut 8. Das Sensierelement 25 generiert in Abhängigkeit von einem auf das Sensierelement 25 ausgeübten Druck und/oder einer Beschleunigung des Sensierelementes 25 ein Fremdkörpersignal F, das proportional abhängig zu dem Druck und/oder der Beschleunigung ist. Die Fremdkörpererkennungseinrichtung 24 detektiert die vom Getreideschneidwerk 4 aufgenommenen Fremdkörper 31 wie beispielsweise Steine oder metallische Gegenstände im Erntegut 8.
Ebenso ist eine Ausführung denkbar, bei der das Sensierelement 25 der Fremdkörpererkennungseinrichtung 24 in einem dem Mähbalken 9 nachgeordneten Einzugsbereich 27 des Getreideschneidwerks 4 am Schneidwerk 4 angebracht sein kann.
Bei einer dritten Ausführung kann die Fremdkörpererkennungseinrichtung 24 unterhalb der Einzugsschnecke 10 im Bereich der Schneidwerksmulde 33 an dem Getreideschneidwerk 4 angeordnet sein.
Die Fremdkörper 26 fallen an dem den Arbeitsorganen 13 im Mähdrescher 1 zugewandten Ende des Schrägförderers 3 in eine dem Schrägförderer 3 nachgeordneten Steinfangmulde 34.

Um die Aufnahme von Fremdkörpern 26 durch das Getreideschneidwerk 4 zu verhindern oder zumindest zu reduzieren, erfolgt die Höheneinstellung des Getreideschneidwerks 4 erfindungsgemäß in Abhängigkeit vom Fremdkörpervorkommen.

Hierzu wird das von dem Sensierelement 25 der Fremdkörpererkennungseinrichtung 24 generierte Fremdkörpersignal F an eine Steuer- uns Auswerteeinheit 35 übergeben, wobei die Intensität der Fremdkörpersignale F proportional abhängig zum Fremdkörpervorkommen ist. Die Steuer- und Auswerteeinheit 35 generiert abhängig vom Fremdkörpersignal F ein Stellsignal G zur Ansteuerung der den Schrägförderer 3 verschwenkenden Hubzylinder 15, um das Vorsatzgerät 4, 5 in der Höhe einzustellen. Zusätzlich werden die von die von dem Drehwinkelsensor 18 des Schrägförderers 3 generierten Neigungssignale C sowie die von den Drehpotentiometern 21 der Tastbügel 20 generierten Bodenabstandssignale A, B an die Steuereinheit 35 übertragen.

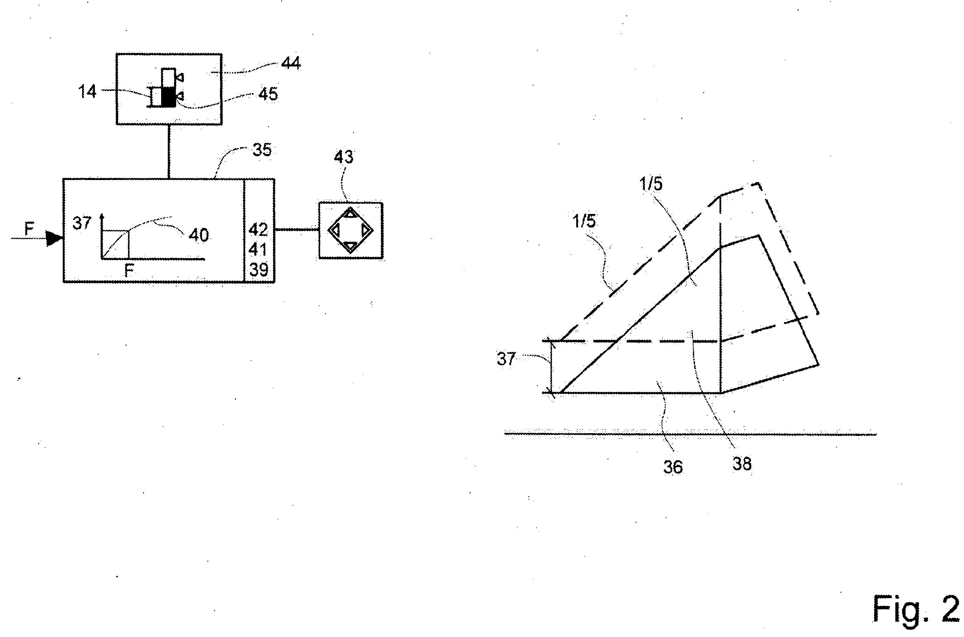

Fig.2 zeigt ausschnittsweise den Mähdrescher 1 gemäß Fig.1 mit einer erfindungsgemäßen Höheneinstellung des Getreideschneidwerks 4. Das Vorsatzgerät 5 wird erst dann von einer unteren Position 36 um eine Höhendifferenz 37 auf eine obere Position 38 angehoben, sobald das Fremdkörpersignal F einen Fremdkörpersignalschwellwert 39 überschreitet, wobei die Höhendifferenz 37 durch eine Kennlinie 40 vorgegeben ist, die in der Steuer- und Auswerteeinheit 35 gespeichert ist. Die Kennlinie 40 gibt die Höhendifferenz 37 derart vor, dass je mehr Fremdkörper (siehe Fig.1) von der Fremdkörpererkennungseinrichtung 24 detektiert werden, desto höher wird das Vorsatzgerät 5 angehoben.
Das Vorsatzgerät 5 verharrt für einen Zeitraum 41 in der oberen Position 38 und wird in die untere Position 36 abgesenkt, wenn der Zeitraum 41 abgelaufen ist oder wenn das Fremdkörpersignal F den Fremdkörpersignalschwellwert 39 für einen weiteren Zeitraum 42 unterschreitet.

Die Steuer- und Auswerteeinheit 35 ist mit einem Bedienelement 43 verbunden, über die ein Bediener die Zeiträume 41, 42 und/oder die Kennlinie 40 und/oder den Fremdkörpersignalschwellwert 39 auswählen und in der Auswerte- und Steuereinheit 35 abspeichern kann. Weiterhin ist die Auswerte- und Steuereinheit 35 mit einer Anzeigeeinheit 44 verbunden, auf der die detektierte Schnitthöhe 14 des Getreideschneidwerks 4 und zum Vergleich eine Soll-Schnitthöhe 45 angezeigt wird.

Die erfindungsgemäße landwirtschaftliche Arbeitsmaschine kann auch als selbstfahrender Feldhäcksler ausgeführt sein, dem im vorderen Bereich ein beispielsweise als Maisgebiss oder Pickup ausgeführtes Vorsatzgerät zugeordnet ist.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: landwirtschaftliche Arbeitsmaschine
- 3: Schrägförderer
- 4: Getreideschneidwerk
- 5: Vorsatzgerät
- 6: Schneidtisch
- 7: Haspel
- 8: Erntegut
- 9: Mähbalken
- 10: Einzugsschnecke
- 12: Maschinengehäuse
- 13: Arbeitsorgan
- 14: definierte Schnitthöhe
- 15: Hubzylinder
- 16: Konsole
- 17: Schwenkachse
- 18: Drehwinkelsensor
- 19: Neigungswinkel
- 20: Tastbügel
- 21: Drehpotentiometer
- 22: Einzugsbereich
- 24: Fremdkörpererkennungseinrichtung
- 25: Sensierelement
- 26: Gehäuse
- 27: Umlenktrommel
- 28: Umlenktrommel
- 29: Kettenförderer
- 30: Boden
- 31: Fremdkörper
- 32: nachgeordneter Einzugsbereich
- 33: Schneidwerksmulde
- 34: Steinfangfmulde
- 35: Steuer- und Auswerteeinheit
- 36: Untere Position
- 37: Höhendifferenz
- 38: obere Position
- 39: Fremdkörpersignalschwellwert
- 40: Kennlinie
- 41: Zeitraum
- 42: Weiterer Zeitraum
- 43: Bedienelement
- 44: Anzeigeeinheit
- 45: Soll-Schnitthöhe
- A: Bodenabstandsignal
- B: Bodenabstandsignal
- C: Neigungssignal
- F: Fremdkörpersignal
- G: Stellsignal

## Patentansprüche

1. Verfahren zur Höheneinstellung eines Vorsatzgerätes (4, 5) an einer landwirtschaftliche Arbeitsmaschine (1,2) mit einer Fremdkörpererkennungseinrichtung (24) zur Detektion von Fremdkörpern (31),
**dadurch gekennzeichnet,**
**dass** die Höheneinstellung des Vorsatzgerätes (4, 5) in Abhängigkeit von dem Fremdkörperaufkommen erfolgt, wobei je mehr Fremdkörper (31) von der Fremdkörpererkennungseinrichtung (24) detektiert werden, umso höher wird das Vorsatzgerät (4, 5) angehoben.

2. Verfahren zur Höheneinstellung eines Vorsatzgerätes (4, 5) an einer landwirtschaftliche Arbeitsmaschine (1, 2) nach Anspruch 1,
**dadurch gekennzeichnet,**
**dass** die Fremdkörpererkennungseinrichtung (24) wenigstens ein Sensierelement (25) aufweist, wobei das Sensierelement (25) ein Fremdkörpersignal (F) generiert, dessen Intensität proportional zum Fremdkörperaufkommen ist und wobei das Fremdkörpersignal (F) einer Steuer- und Auswerteeinheit (35) zugeführt wird und die Steuer und Auswerteeinheit (35) zumindest ein Stellsignal (G) generiert, welches die Höheneinstellung des Vorsatzgerätes (4, 5) bewirkt.

3. Verfahren zur Höheneinstellung eines Vorsatzgerätes (4, 5) an einer landwirtschaftliche Arbeitsmaschine nach wenigstens einem der vorhergehenden Ansprüche,
**dadurch gekennzeichnet,**
**dass** das Vorsatzgerät (4, 5) erst dann angehoben wird, wenn das Fremdkörpersignal (F) einen Fremdkörpersignalschwellwert (39) übersteigt.

4. Verfahren zur Höheneinstellung eines Vorsatzgerätes (4, 5) an einer landwirtschaftliche Arbeitsmaschine (1, 2) nach wenigstens einem der vorhergehenden Ansprüche,
**dadurch gekennzeichnet,**
**dass** das Vorsatzgerät (4, 5) um eine Höhendifferenz (37) auf eine obere Position (38) angehoben wird, wobei die Höhendifferenz (37) durch eine Kennlinie (40) vorgegeben wird.

5. Verfahren zur Höheneinstellung eines Vorsatzgerätes (4, 5) an einer landwirtschaftliche Arbeitsmaschine (1, 2) nach wenigstens einem der vorhergehenden Ansprüche,
**dadurch gekennzeichnet,**
**dass** das Vorsatzgerät (4, 5) für einen Zeitraum (41) in der oberen Position (38) verharrt und nach Ablauf des Zeitraums (41) abgesenkt wird.

6. Verfahren zur Höheneinstellung eines Vorsatzgerätes (4, 5) an einer landwirtschaftliche Arbeitsmaschine (1, 2) nach wenigstens einem der vorhergehenden Ansprüche,
**dadurch gekennzeichnet,**
**dass** das Vorsatzgerät (4, 5) abgesenkt wird, wenn das Fremdkörpersignal (F) den Fremdkörpersignalschwellwert (39) für einen weiteren Zeitraum (42) unterschreitet.

7. Verfahren zur Höheneinstellung eines Vorsatzgerätes (4, 5) an einer landwirtschaftliche Arbeitsmaschine (1, 2) nach wenigstens einem der vorhergehenden Ansprüche,
**dadurch gekennzeichnet;**
**dass** die Kennlinie (40) und/oder der Fremdkörpersignalschwellwert (39) und/oder der Zeitraum (41) und /oder der weitere Zeitraum (42) frei wählbar und abspeicherbar sind.

8. Vorrichtung zur Höheneinstellung eines Vorsatzgerätes (4, 5) an einer landwirtschaftliche Arbeitsmaschine (1, 2) und mit einer Fremdkörpererkennungseinrichtung (24) zur Detektion von Fremdkörpern (31),
**dadurch gekennzeichnet,**
**dass** die Fremdkörpererkennungseinrichtung (24) ein oder mehrere Sensierelemente (25) zur Erfassung von Fremdkörpern (31) aufweist und die von den Sensierelementen (25) generierten Fremdkörpersignale (F) einer Steuer- und Auswerteeinheit (35) zugeführt werden, wobei in der Steuer- und Auswerteeinheit (35) Höhendifferenzen (37) hinterlegt sind und in Abhängigkeit von den Fremdkörpersignalen (F) Stellsignale (G) von der Steuer- und Auswerteeinheit (35) an das Vorsatzgerät (4,5) höhenbeweglich führende Hubzylinder (15) übermittelt werden, so dass die Höhenverstellung des Vorsatzgerätes (4, 5) in Abhängigkeit von dem Fremdkörperaufkommen derart erfolgt, dass je mehr Fremdkörper (31) von der Fremdkörpererkennungseinrichtung (24) detektiert werden, desto höher wird das Vorsatzgerät (5) angehoben.

9. Vorrichtung zur Höheneinstellung eines Vorsatzgerätes (4, 5) an einer landwirtschaftliche Arbeitsmaschine (1, 2) und mit einer Fremdkörpererkennungseinrichtung (24) zur Detektion von Fremdkörpern (31) nach Anspruch 8,
**dadurch gekennzeichnet,**
**dass** der landwirtschaftlichen Arbeitsmaschine (1, 2) ein Schrägförderer (3) zugeordnet ist und die Fremdkörpererkennungseinrichtung (24) an dem Einzugsbereich (22) des Schrägförderers (3) an der landwirtschaftlichen Arbeitsmaschine (2) angeordnet ist.

10. Vorrichtung zur Höheneinstellung eines Vorsatzgerätes (4, 5) an einer landwirtschaftliche Arbeitsmaschine (1, 2) und mit einer Fremdkörpererkennungseinrichtung (24) zur Detektion von Fremdkörpern (31) nach einem der Ansprüche 8 bis 9,
**dadurch gekennzeichnet,**
**dass** der landwirtschaftlichen Arbeitsmaschine (1, 2) ein einen Mähbalken (9) umfassendes Getreideschneidwerk (4) zugeordnet ist und die Fremdkörpererkennungseinrichtung (24) in einem dem Mähbalken (9) nachgeordneten Einzugsbereich (27) am Getreideschneidwerk (4) angeordnet ist.

11. Vorrichtung zur Höheneinstellung eines Vorsatzgerätes (4, 5) an einer landwirtschaftliche Arbeitsmaschine (1, 2) und mit einer Fremdkörpererkennungseinrichtung (24) zur Detektion von Fremdkörpern (31) nach einem der Ansprüche 8 bis 10,
**dadurch gekennzeichnet,**
**dass** das Sensierelement (25) in Abhängigkeit von einem auf das Sensierelement (25) ausgeübten Druck und/oder einer Beschleunigung des Sensierelementes (25) ein Fremdkörpersignal (F), das proportional zu dem Druck und/oder der Beschleunigung ist, generiert.

## Claims

1. A method of height adjustment of a front-mounted implement (4, 5) on an agricultural working machine (1, 2) having a foreign body detection device (24) for the detection of foreign bodies (31),
**characterised in that**
height adjustment of the front-mounted implement (4, 5) is effected in dependence on foreign body occurrence, wherein the greater the number of foreign bodies (31) detected by the foreign body detection device (24), the correspondingly higher is the front-mounted implement (4, 5) lifted.

2. A method of height adjustment of a front-mounted implement (4, 5) on an agricultural working machine (1, 2) according to claim 1 **characterised in that** the foreign body detection device (24) has at least one sensing element (25), wherein the sensing element (25) generates a foreign body signal (F) whose intensity is proportional to the foreign body occurrence and wherein the foreign body signal (F) is fed to a control and evaluation unit (35) and the control and evaluation unit (35) generates at least one setting signal (G) which causes the height adjustment of the front-mounted implement (4, 5).

3. A method of height adjustment of a front-mounted implement (4, 5) on an agricultural working machine according to at least one of the preceding claims **characterised in that** the front-mounted implement (4, 5) is only lifted when the foreign body signal (F) exceeds a foreign body signal threshold (39).

4. A method of height adjustment of a front-mounted implement (4, 5) on an agricultural working machine (1, 2) according to at least one of the preceding claims **characterised in that** the front-mounted implement (4, 5) is lifted to an upper position (38) by a height difference (37), the height difference (37) being predetermined by a characteristic curve (40).

5. A method of height adjustment of a front-mounted implement (4, 5) on an agricultural working machine (1, 2) according to at least one of the preceding claims **characterised in that** the front-mounted implement (4, 5) remains in the upper position (38) for a period of time (41) and is lowered after expiry of the period of time (41).

6. A method of height adjustment of a front-mounted implement (4, 5) on an agricultural working machine (1, 2) according to at least one of the preceding claims **characterised in that** the front-mounted implement (4, 5) is lowered if the foreign body signal (F) falls below the foreign body signal threshold (39) for a further period of time (42).

7. A method of height adjustment of a front-mounted implement (4, 5) on an agricultural working machine (1, 2) according to at least one of the preceding claims **characterised in that** the characteristic curve (40) and/or the foreign body signal threshold (39) and/or the period of time (41) and/or the further period of time (42) can be freely selected and stored.

8. Apparatus for height adjustment of a front-mounted implement (4, 5) on an agricultural working machine (1, 2) having a foreign body detection device (24) for the detection of foreign bodies (31),
**characterised in that**
the foreign body detection device (24) has one or more sensing elements (25) for detecting foreign bodies (31) and the foreign body signals (F) generated by the sensing elements (25) are fed to a control and evaluation unit (35), wherein height differences (37) are stored in the control and evaluation unit (35) and setting signals (G) are passed in dependence on the foreign body signals (F) from the control and evaluation unit (35) to stroke cylinders (15) guiding the front-mounted implement (4, 5) movably in respect of height so that height displacement of the front-mounted implement (4, 5) is effected in dependence on the foreign body occurrence in such a way that the greater the number of foreign bodies (31) detected by the foreign body detection device (24), the correspondingly higher is the front-mounted implement (5) lifted.

9. Apparatus for height adjustment of a front-mounted implement (4, 5) on an agricultural working machine (1, 2) having a foreign body detection device (24) for the detection of foreign bodies (31) according to claim 8, **characterised in that** an inclined conveyor (3) is associated with the agricultural working machine (1, 2) and the foreign body detection device (24) is arranged at the intake region (22) of the inclined conveyor (3) on the agricultural working machine (2).

10. Apparatus for height adjustment of a front-mounted implement (4, 5) on an agricultural working machine (1, 2) having a foreign body detection device (24) for the detection of foreign bodies (31) according to one of claims 8 and 9, **characterised in that** a grain cutting mechanism (4) including a mowing bar (9) is associated with the agricultural working machine (1, 2) and the foreign body detection device (24) is arranged in an intake region (27) disposed downstream of the mowing bar (9) on the grain cutting mechanism (4).

11. Apparatus for height adjustment of a front-mounted implement (4, 5) on an agricultural working machine (1, 2) having a foreign body detection device (24) for the detection of foreign bodies (31) according to one of claims 8 to 10 **characterised in that** in dependence on a pressure exerted on the sensing element (25) and/or an acceleration of the sensing element (25) the sensing element (25) generates a foreign body signal (F) which is proportional to the pressure and/or the acceleration.

## Revendications

1. Procédé de réglage en hauteur d'un appareil adaptable (4, 5) sur une machine de travail agricole (1, 2), comprenant un dispositif de reconnaissance de corps étrangers (24) pour la détection de corps étrangers (31), **caractérisé en ce que** le réglage en hauteur de l'appareil adaptable (4, 5) s'effectue en fonction de l'approche des corps étrangers, dans lequel plus le nombre de corps étrangers (31) détectés par le dispositif de reconnaissance de corps étrangers (24) est élevé, plus la hauteur à laquelle l'appareil adaptable (4, 5) est soulevé est élevée.

2. Procédé de réglage en hauteur d'un appareil adaptable (4, 5) sur une machine de travail agricole (1, 2) selon la revendication 1, **caractérisé en ce que** le dispositif de reconnaissance de corps étrangers (24) présente au moins un élément de détection (25), dans lequel l'élément de détection (25) génère un signal de corps étrangers (F) dont l'intensité est proportionnelle à l'approche des corps étrangers et dans lequel le signal de corps étrangers (F) est acheminé à une unité de commande et d'exploitation (35) et l'unité de commande et d'exploitation (35) génère au moins un signal de réglage (G) qui induit le réglage en hauteur de l'appareil adaptable (4, 5).

3. Procédé de réglage en hauteur d'un appareil adaptable (4, 5) sur une machine de travail agricole selon au moins l'une quelconque des revendications précédentes, **caractérisé en ce que** l'appareil adaptable (4, 5) n'est soulevé que lorsque le signal de corps étrangers (F) dépasse une valeur seuil de signal de corps étrangers (39).

4. Procédé de réglage en hauteur d'un appareil adaptable (4, 5) sur une machine de travail agricole (1, 2) selon au moins l'une quelconque des revendications précédentes, **caractérisé en ce que** l'appareil adaptable (4, 5) est soulevé d'une différence de hauteur (37) à une position supérieure (38), la différence de hauteur (37) étant prédéfinie par une ligne caractéristique (40).

5. Procédé de réglage en hauteur d'un appareil adaptable (4, 5) sur une machine de travail agricole (1, 2) selon au moins l'une quelconque des revendications précédentes, **caractérisé en ce que** l'appareil adaptable (4, 5) reste sur une certaine période de temps (41) dans la position supérieure (38) et est abaissé une fois la période de temps (41) écoulée.

6. Procédé de réglage en hauteur d'un appareil adaptable (4, 5) sur une machine de travail agricole (1, 2) selon au moins l'une quelconque des revendications précédentes, **caractérisé en ce que** l'appareil adaptable (4, 5) est abaissé lorsque le signal de corps étrangers (F) est inférieur à la valeur seuil de signal de corps étrangers (39) sur une autre période de temps (42).

7. Procédé de réglage en hauteur d'un appareil adaptable (4, 5) sur une machine de travail agricole (1, 2) selon au moins l'une quelconque des revendications précédentes, **caractérisé en ce que** la ligne caractéristique (40) et/ou la valeur seuil de signal de corps étrangers (39) et/ou la période de temps (41) et/ou l'autre période de temps (42) peut ou peuvent être librement choisies et enregistrées.

8. Dispositif de réglage en hauteur d'un appareil adaptable (4, 5) sur une machine de travail agricole (1, 2) et comprenant un dispositif de reconnaissance de corps étrangers (24) pour la détection de corps étrangers (31), **caractérisé en ce que** le dispositif de reconnaissance de corps étrangers (24) présente un ou plusieurs éléments de détection (25) pour enregistrer des corps étrangers (31) et les signaux de corps étrangers (F) générés par les éléments de détection sont acheminés à une unité de commande et d'exploitation (35), dans lequel des différences de hauteur (37) sont enregistrées dans l'unité de commande et d'exploitation (35) et des signaux de réglage (G) sont transmis, en fonction des signaux de corps étrangers (F), par l'unité de commande et d'exploitation (35) à des cylindres de levage (15) guidant l'appareil adaptable (4, 5) en hauteur de sorte que le réglage en hauteur de l'appareil adaptable (4, 5) s'effectue en fonction de l'approche de corps étrangers de manière que plus le nombre de corps étrangers (31) détectés par le dispositif de reconnaissance de corps étrangers (24) est élevé, plus la hauteur à laquelle l'appareil adaptable (4, 5) est soulevé est élevée.

9. Dispositif de réglage en hauteur d'un appareil adaptable (4, 5) sur une machine de travail agricole (1, 2) et comprenant un dispositif de reconnaissance de corps étrangers (24) pour la détection de corps étrangers (31) selon la revendication 8, **caractérisé en ce qu'**un transporteur incliné (3) est affecté à la machine agricole (1, 2) et le dispositif de reconnaissance de corps étrangers (24) est agencé sur la zone d'alimentation du transporteur incliné (3) sur la machine de travail agricole (2).

10. Dispositif de réglage en hauteur d'un appareil adaptable (4, 5) sur une machine de travail agricole (1, 2) et comprenant un dispositif de reconnaissance de corps étrangers (24) pour la détection de corps étrangers (31) selon l'une quelconque des revendications 8 à 9, **caractérisé en ce qu'**un outil de moissonnage comprenant une barre de coupe (9) est affecté à la machine agricole et le dispositif de reconnaissance de corps étrangers (24) est agencé dans une zone d'alimentation (27) agencée en aval de la barre de coupe (9) sur l'outil de moissonnage (4).

11. Dispositif de réglage en hauteur d'un appareil adaptable (4, 5) sur une machine de travail agricole (1, 2) et comprenant un dispositif de reconnaissance de corps étrangers (24) pour la détection de corps étrangers (31) selon l'une quelconque des revendications 8 à 10, **caractérisé en ce que** l'élément de détection (25) génère, en fonction d'une pression exercée sur l'élément de détection (25) et/ou d'une accélération de l'élément de détection (25), un signal de corps étrangers (F) qui est proportionnel à la pression et/ou à l'accélération.
